# EUROPEAN PATENT APPLICATION

(11) **EP 2 141 783 A2**
(43) Date of publication of application: **06.01.2010**
(21) Application number: 09161359.6
(22) Date of filing: 28.05.2009
(51) Int. Cl.: H02K 1/22

(54) **Rotational machine**

(30) Priority: 02.07.2008 JP 2008173839
(71) Applicant: Hitachi Ltd., Chiyoda-ku Tokyo 100-8280 (JP)
(72) Inventor: Tajima, Susumu, Chiyoda-ku Tokyo 100-8220 (JP); Baba, Yuichiro, Chiyoda-ku Tokyo 100-8220 (JP); Takano, Masami, Chiyoda-ku Tokyo 100-8220 (JP)
(74) Representative: Erny, Tobias

(57) **Abstract**

A rotational machine which improves the reliability of the permanent magnets 9 provided between claw poles 6, 7 by preventing shift in an axial direction during operation of the rotational machine. A stator 5 and a rotor 2 supported rotatably on an inner periphery of the stator 5 are provided. The rotor 2 has a pair of claw poles 6, 7 disposed in an alternately opposed orientation and having cylindrical field exciting coils 14 on a central section. A permanent magnet 9 is disposed between the claw poles 6, 7. A holder 8 retains the permanent magnets 9 to a fixed position. The holder 8 retains the permanent magnets 9 between the claw poles 6, 7 by pressing on a side face of the claw poles 6, 7 as a result of an elastic force acting with respect to the rotational direction of the rotational machine.

## Description

### FIELD OF THE INVENTION

The present invention relates to a rotational machine and in particular relates to a rotational machine suitable for use in a Rundle-type rotor provided with a claw pole.

### BACKGROUND OF THE INVENTION

The present inventors have previously proposed improvements to the mounting characteristics and strength with respect a centrifugal force of a permanent magnet by using a holder applying an elastic force in a radial direction to retain a permanent magnet disposed between claw poles. (For example, see Japanese Unexamined Patent Application Publication No. 2004-7958).

### SUMMARY OF THE INVENTION

The device disclosed in Japanese Unexamined Patent Application Publication No. 2004-7958 is sufficient for practical use with respect to retaining permanent magnets in a radial direction.

A conventional technique places a tongue-shaped projection provided on a holder in contact with a wall section of a bobbin of a field exciting coil to prevent shift during assembly in an axial direction relative to the direction of insertion between opposed claw poles of a permanent magnet provided between the opposed claw poles. However it has become clear that restriction of shift in an axial position has not been enabled with respect to a direction opposite to the direction of insertion of a permanent magnet provided between opposed claw poles during assembly.

Therefore it is an object of the present invention to provide a rotational machine which is made highly reliable by preventing shift in an axial direction of a permanent magnet provided between claw poles during operation of the rotational machine.

Therefore it is an object of the present invention to provide a highly-reliable rotational machine capable of preventing shift in an axial direction of a permanent magnet provided between claw poles during operation of the rotational machine.

(1) In order to reach the above object, the present invention provides a rotational machine having a stator and a rotor supported rotatably on an inner periphery of the stator, the rotor having a pair of claw poles disposed in an alternately opposed orientation and having cylindrical field exciting coils on a central section, a permanent magnet disposed between the claw poles and a holder retaining the permanent magnets to a fixed position, the holder retains the permanent magnets between the claw poles by pressing on a side face of the claw poles as a result of an elastic force acting with respect to the rotational direction of the rotational machine.
In this arrangement, improvements in reliability are enabled by preventing shift in an axial direction of the permanent magnet disposed between claw poles during operation of the rotational machine.

(2) In (1) above, it is preferred that the holder is such that the positions pressing onto the side wall of the claw pole as a result of the elastic force applied in a rotational direction are disposed at a plurality of side faces of the permanent magnets.

(3) In (2) above, it is preferred that the holder is such that the interval between two faces pressing onto the side walls of the claw poles when engaged between the claw poles is wider than the interval between the claw poles.

(4) In (2) above, it is preferred that the holder is such that the interval between two faces pressing onto the side walls of the claw poles when engaged between the claw poles is wider than the interval on the side forming the rear end when compared with the interval on the side forming the tip end when inserted between the claw poles.

(5) In (1) above, it is preferred that the holder is such that an auxiliary claw is provided on a side face pressing onto a side face of the claw pole, the auxiliary claw is a projection formed by deforming a section of the side face of the holder.

(6) In (5) above, it is preferred that the holder is such that the auxiliary claw is formed by cutting and raising a section of the side face of the holder, and the direction of cutting and raising being in a single direction.

(7) In (6) above, it is preferred that the direction of the cutting and raising of the auxiliary claw is opposite to the direction of insertion between the claw poles.

(8) In (1) above, it is preferred that the holder is formed from magnetic material.

(9) In (1) above, it is preferred that the holder is such that the sectional area of the central connecting section connecting a plurality of positions pressing on the side faces of the claw poles by the elastic force acting in a rotational direction is smaller than the sectional area of the plurality of positions pressing on a side face of the claw poles.

(10) In (1) above, it is preferred that the holder retains the permanent magnets between the claw poles by pressing with respect to a diameter of the claw poles due to the elastic force acting with respect to the diameter of the rotational machine.

According to this invention, improvement in reliability is enabled by preventing shift in an axial direction by the permanent magnets provided between claw poles during operation of the rotational machine.

### BRIEF DESCRIPTION OF THE DRAWINGS

FIG. 1 is a sectional view showing the overall structure of a rotational machine according to a first embodiment of the present invention;
FIG. 2 is a perspective view of the structure of a holder and permanent magnets used in the rotational machine according to the first embodiment of the present invention;
FIG. 3A, FIG. 3B, FIG. 3C, and FIG. 3D are explanatory views of the process of insertion between the claw pole of a holder and permanent magnets used in the rotational machine according to the first embodiment of the present invention;
FIG. 4A, FIG. 4B, and FIG. 4C are explanatory views of the process of insertion between the claw pole of a holder and permanent magnets used in the rotational machine according to a second embodiment of the present invention;
FIG. 5A, FIG. 5B, FIG. 5C, and FIG. 5D are explanatory views of the process of insertion between the claw pole of a holder and permanent magnets used in the rotational machine according to a third embodiment of the present invention;
FIG. 6 is a perspective view of a holder and permanent magnets used in the rotational machine according to a fourth embodiment of the present invention;
FIG. 7 is a perspective view of a holder and permanent magnets used in the rotational machine according to a fifth embodiment of the present invention; and
FIG. 8 is a perspective view of a holder and permanent magnets used in the rotational machine according to a sixth embodiment of the present invention.

### DETAILED DESCRIPTION OF THE PREFERRED EMBODIMENTS

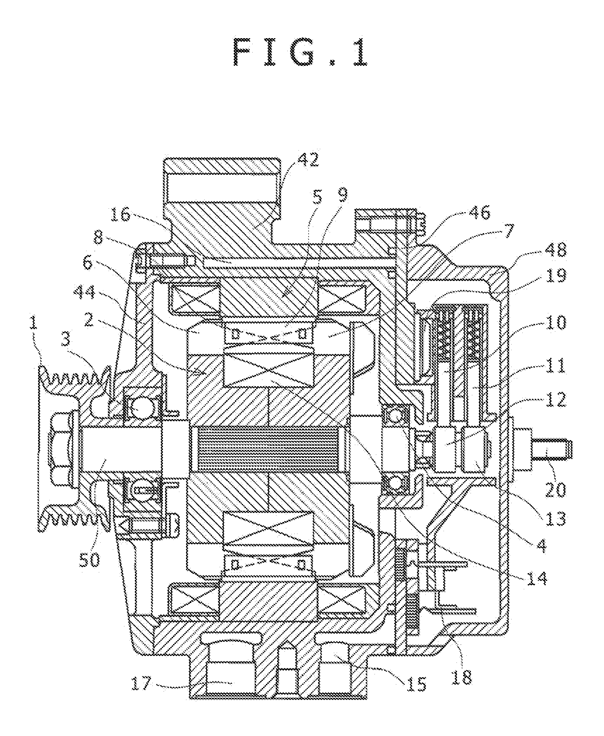

The structure of a rotational machine according to a first embodiment of the present invention will be described hereafter making reference to FIGs. 1 to 3.
Firstly with reference to FIG. 1 of the drawings, the overall structure of the rotational machine according to the present embodiment will be described.
FIG. 1 is a sectional view showing the overall structure of a rotational machine according to the first embodiment of the present invention.

An alternator for a vehicle will be used for the description of an example of a rotational machine. An alternator for a vehicle is provided with a rotor 2 and a stator 5. The stator 5 is fixed to the inner peripheral side of a housing 42 having a cross-section in the shape of a letter "U". The rotor 2 is fixed to a shaft 50 is disposed via a space on an inner peripheral side of the stator 5. The rotor 2 is inserted from an opening in the housing 42. A round plate-shaped front housing 44 is fixed by a screw to the opening of the housing 42. A hole is provided in a central section of the front housing 44 for mounting a bearing 3. A hole is provided in a central section of the base of the U-shaped housing 42 for mounting a bearing 4.

The shaft 50 is rotatably supported on the front housing 44 and housing 42 by the bearings 3, 4. A pulley 1 receives a drive force from the vehicle via a belt (not shown) and in this manner, the rotor 2 retained by the bearings 3, 4 is rotated in an inner section of the stator 5.

The rotor 2 is provided with a pair of claw poles 6, 7, a permanent magnet 9 and field exciting coils 14. The claw poles 6, 7 are provided respectively with a plurality of claw sections. The claw section of the claw pole 6 and the claw section of the claw pole 7 are assembled to be mutually opposed and positioned differently. The holder 8 together with the permanent magnet 9 is disposed between the claw sections opposite the pair of claw poles 6, 7. Furthermore the rotor 2 is supplied with a current from brushes 10, 11 to slip rings 12, 13 mounted on the shaft 50 thereby exciting field exciting coils 14 positioned in an inner section of the rotor 2.

The vehicle alternator receives a coolant of the internal combustion engine from a coolant supply port 15 provided in the housing 42 to thereby cool the stator 5 and a rectifier 18 by circulating coolant suitably into coolant recirculation passages 16 and coolant discharge ports 17 formed in an inner section of a generator to remove [il] the heat produced by components during power generation by the vehicle alternator. After cooling, the coolant is returned from the coolant discharge port 17 to the internal combustion engine, is cooled by a radiator attached to the internal combustion engine and recirculated.

A voltage regulator 19 regulates the produced voltage, is mounted together with the rectifier 18 on a base 46 and fixed using a screw to the side face of the housing 42. The brushes 10, 11 are mounted on an outer side of the voltage regulator 19. A cover 48 covering the voltage regulator 19, rectifier 18 [i2] or brushes 10, 11 is mounted by a screw on the housing 42. A terminal 20 electrically connects the vehicle wiring with the vehicle alternator and is connected to the rectifier 18 to supply an output current after rectification to the vehicle.

The rotational machine using a Rundle-type rotor having a claw pole can be used as an electrical motor in addition to the above type of use as a vehicle alternator. In recent years, in addition to use as a vehicle alternator, an electrical motor using a Rundle-type rotor having a claw pole is used in stators and generators used as stators for starting an internal combustion engine during idle stop.

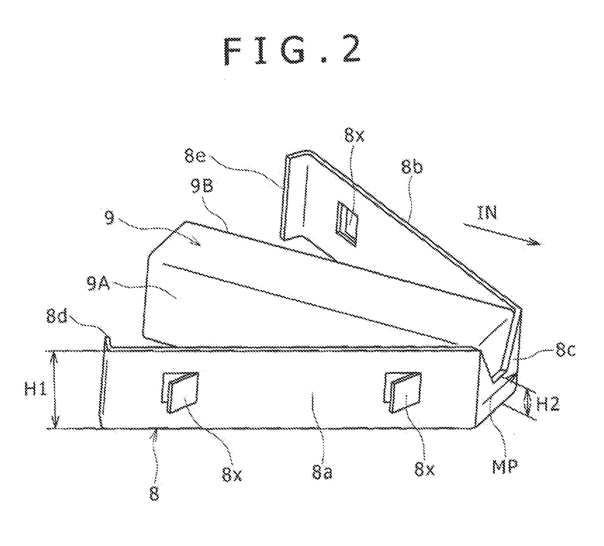

Next with reference to FIG. 2, the structure of a permanent magnet and holder using a rotational machine according to the present embodiment will be described.
FIG. 2 is a perspective view showing the structure of a permanent magnet and holder used in a rotational machine according to the first embodiment of the present invention. In FIG. 2, the same components as those shown in FIG. 1 are denoted by the same reference numerals.

FIG. 2 shows a 3-D image of the permanent magnets 9 and holder 8 as assembled.

The shape of the permanent magnet 9 is rectangular parallelepiped and each side or angle of the rectangle is formed in a cut-off shape. A first side face 9A of the permanent magnet 9 for example is opposite the side face of the claw section of the claw pole 6 shown in FIG. 1. A second side face 9B opposite the first [i3] side face 9A of the permanent magnet 9 for example is opposite the side face of the claw section of the claw pole 7 shown in FIG. 1. When the side with the first side face 9A makes magnetic connection with the N pole, the side with the second side face 9B of the permanent magnet 9 makes magnetic connection with the S pole. The permanent magnet 9 is magnetized after insertion between the claw sections of the claw poles.

The holder 8 is formed by bending a tabular metal plate. The holder 8 is provided with insertion side faces 8a, 8b, a central connection section 8c, and an end curved section 8d, 8e. The insertion side faces 8a, 8b are a section positioned between a side face of the permanent magnet 9 and a side face of the claw section of the claw poles. The central connection section 8c is a section positioned toward the insertion direction IN between the claw sections of the claw poles of the permanent magnet 9 and connects the insertion side face 8a and the insertion side face 8b. It is positioned at an end section in an opposite direction (direction opposite to insertion) to the direction of insertion IN of the end curved sections 8d, 8e and is bent from the insertion side faces 8a, 8b toward to permanent magnet 9.

The V-shaped holder 8 formed from the insertion side faces 8a, 8b and the central connection section 8c has an elastic force. The state shown in the figures is the state when a force is not applied to the holder 8. For example, when a force is applied to sandwich two positions of the end curved sections 8d, 8e, the insertion side faces 8a, 8b are respectively deformed in a direction of contact with the side face of the permanent magnet 9. Thus when the assembled permanent magnet 9 and holder 8 are inserted between the claw poles of the rotor 2, the permanent magnet 9 can be retained with respect to an axial direction in the insertion opposite direction (direction opposite to insertion).

Two auxiliary claws 8x are provided respectively on the side face of the holder 8, in other words, on the insertion side faces 8a, 8b. The auxiliary claws 8x are provided by deforming a section of the holder 8 on a face contacting the claw poles of the holder 8. The auxiliary claws 8x are cut and raised to open in a direction (direction opposite to insertion) opposite to the insertion direction IN between the claw poles. Thus when the assembled permanent magnet 9 and holder 8 are inserted between the claw poles of the rotor 2, the auxiliary claws 8x avoids causing an adverse effect on assembly operation for example by catching on the claw pole and play the role of further improving the retaining force in an axial direction with respect to the opposite direction to the insertion direction (direction opposite to insertion).

The end curved sections 8d, 8e are engaged with the opposite insertion end section of the permanent magnet 9 when the insertion side faces 8a, 8b are mounted on the side face of the permanent magnet 9 and prevent the permanent magnet 9 from detaching towards a side opposite to that of insertion.

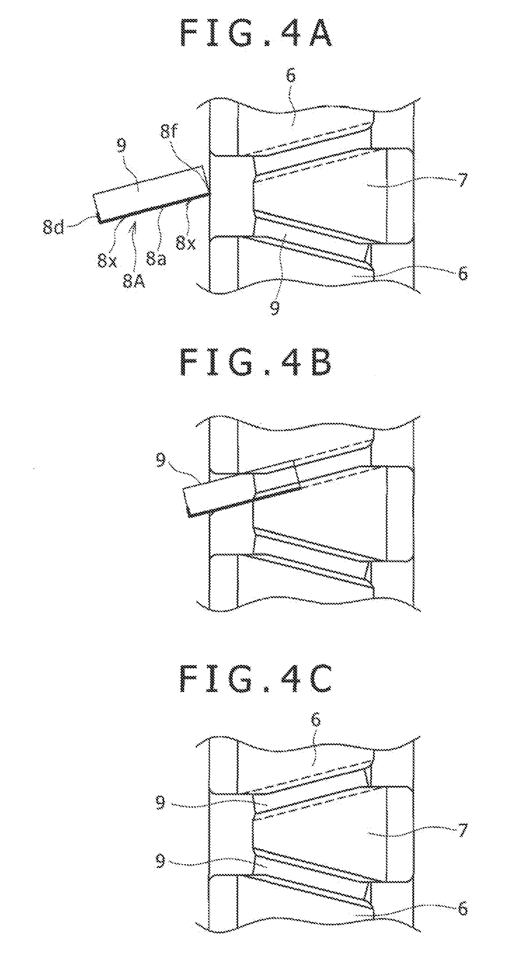

The holder 8 is thin in comparison with the width of the magnet 9. Thus when the permanent magnet 9 is disposed between the claw poles, the permanent magnet 9 abuts with the projection provided on an outer peripheral side of the side face of the claw pole. Consequently when the rotor rotates, the centrifugal force produced in the permanent magnet can be retained by the projection provided on an outer peripheral side of the claw pole side face. The shape of the projection is the same as that shown in FIG. 4 of Japanese Unexamined Patent Application Publication No. 2004-7958.

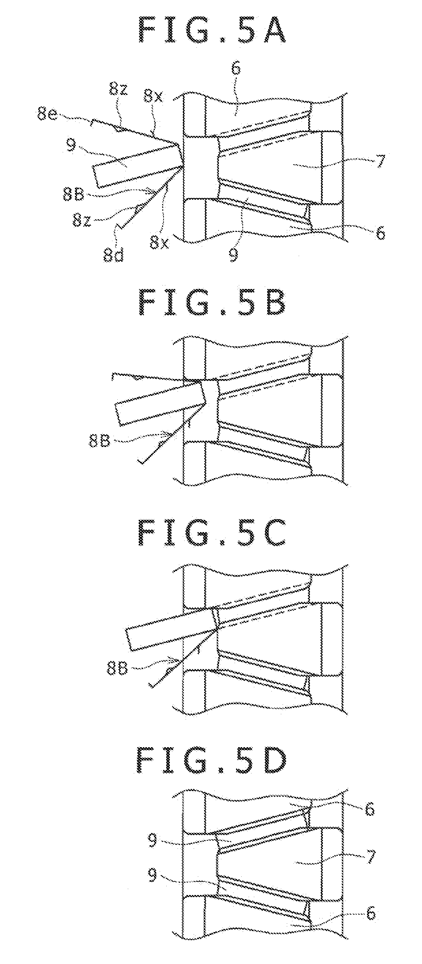

By forming the holder 8 from magnetic material, the holder 8 not only fixes the permanent magnet 9 with respect to an axial direction but also can function as an auxiliary pole for example as shown in FIG. 5 of Japanese Unexamined Patent Application Publication No.2002-262530. As a result, the magnetic flux produced by the permanent magnet 9 can be effectively used to improve the performance of the rotational machine.

However it is necessary to prevent short circuiting of the magnetic flux between the claw poles in order for the holder 8 to maximize the role played as an auxiliary pole as a result of forming the holder 8 from magnetic material. In this manner, when the side of the first side face 9A of the permanent magnet 9 makes magnetic contact with the N pole and the side of the second side face 9B makes magnetic contact with the S pole, a magnetic path shown by the mark MP is formed in the central connection section 8c by the holder 8 which is formed from magnetic material. As a result, short circuiting between adjacent claw poles can be minimized by reducing the height H2 of the central connection section 8c with respect to the height H1 of the insertion side face 8a, 8b pressing on the side face of the claw-shape magnetic poles and by reducing the sectional area through which the magnetic flux flows to saturate the magnetic flux.

In the arrangement shown in FIG. 2, although the auxiliary claw 8x is cuts and raises the side opposite to that of insertion, it is possible to cut and raise the insertion side. Furthermore the auxiliary claw 8x near to the central connection section 8c as shown in Fig. 2 cuts and raises the side opposite to that of insertion and the auxiliary claw 8x near to the end curved sections 8d, 8e can cut and raise the insertion side. Furthermore the auxiliary claws 8x are not required to be integrated with the holder 8 and may be formed as a separate clip shape.

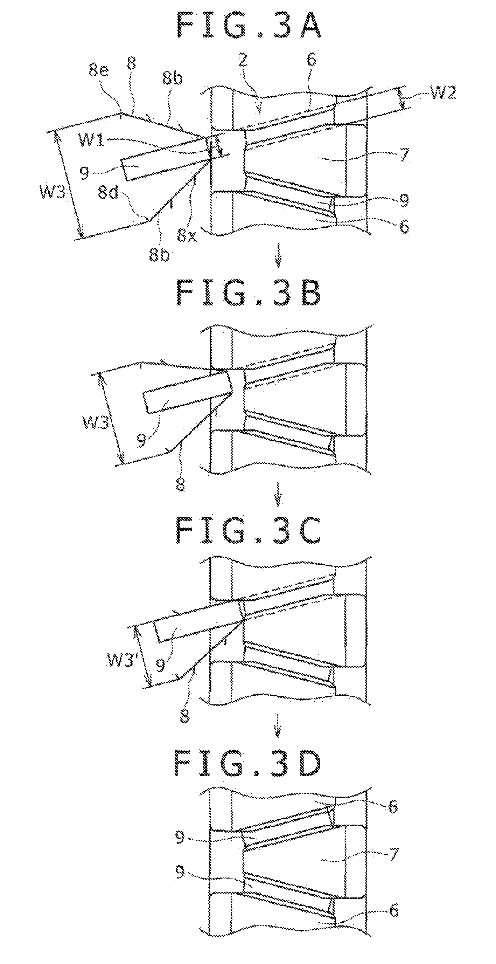

Using FIGs . 3A to 3D, the insertion process of the permanent magnet and the holder between the claw poles used in a rotational machine according to the present embodiment will be described.
FIGs . 3A to 3D show the insertion process of the permanent magnet and the holder between the claw poles used in the rotational machine according to the first embodiment of the present invention. In FIGs. 3A to 3D, the same components as those in FIG. 1 and FIG. 2 are denoted by the same reference numerals.

FIG. 3A shows the state after completion of assembly of the rotor and prior to insertion of the permanent magnet 9 stored in an inner section of the holder 8 between the claw poles 6, 7 of the rotor 2.

The permanent magnet 9 when assembled with the holder 8 is inserted between the claw poles 6, 7 of the rotor 2. However the width W1 of the section (central connection section 8c) of the holder 8 which is inserted by the tip into the rotor is substantially equal to or smaller than the interval W2 between the claw poles of the rotor. The width W3 of the section inserted after insertion is larger than the interval W2 of the claw poles 23.

As shown in FIG. 3B, the permanent magnet 9 and the holder 8 are inserted between the claw poles 6, 7 of the rotor 2. In this manner, as shown in FIG. 3C, initially the insertion side face 8b is deformed to make contact with the side face of the claw pole 6. The width W3' on the rear end side of the holder 8 tapers gradually towards the interval W2 between the claw poles. Finally as shown in FIG. 3D, it equals the interval W2 between the claw poles and is disposed between the claw poles 6, 7.

Since the holder 8 retains an elastic force, when it is inserted between the claw poles 6, 7, an effect is obtained of pressing with an elastic force on a side face of the claw poles 6, 7. It is possible to fix the holder 8 and the permanent magnet 9 with respect to an axial direction together with fixing with respect to the diameter and thus the role of the holder in fixing the permanent magnet to a predetermined position is realized.

The auxiliary claw 8x provided on the side face of the holder 8 in FIG. 2 is provided by deforming a section of the holder on a face in contact with the claw pole of the holder 8. Since the auxiliary claw 8x is cut and raised to open in a direction opposite to the direction of insertion between the claw poles, when the assembled permanent magnet 9 and holder 8 are inserted between the claw poles of the rotor 2, adverse effects on assembly operation for example by catching on the claw pole are avoided and the retaining force in an axial direction with respect to the opposite direction to the insertion direction (direction opposite to insertion) is improved.

As described above, according to the present embodiment, the reliability of the permanent magnets provided between claw poles can be improved by preventing shift in an axial direction during operation of the vehicle alternator.

Using FIGs. 4A to 4C, the structure of a holder used in the rotational machine according to a second embodiment of the present invention will be described. The overall structure of the rotational machine according to the present embodiment is the same as that described in FIG. 1.
FIGs . 4A to 4C show the insertion process of the permanent magnet and the holder between the claw poles used in the rotational machine according to the second embodiment of the present invention. In FIGs. 4A to 4C, the same components as those in FIGs . 1 to 3 are denoted by the same reference numerals.

As shown in FIG. 2, although the holder is disposed on two side faces of the permanent magnet, even when disposed on either of the side faces, the same effect of pressing with an elastic force on the side face of the claw pole is realized.

In the example shown in FIG. 4, the holder 8A is formed by bending a tabular metal plate. The holder 8A is provided with an insertion side face 8a, an end curved section 8d, an insertion end curved section 8f and an auxiliary claw 8x. The end curved section 8d is pre-formed by bending to make contact with the opposite insertion side end of the permanent magnet 9 and the insertion side end curbed section 8f is pre-formed by bending to make contact with the insertion side end of the permanent magnet 9.

FIG. 4A shows the state after completion of assembly of the rotor and prior to insertion of the permanent magnet 9 stored in an inner section of the holder 8A between the claw poles 6, 7 of the rotor 2.

As shown in FIG. 4B, the permanent magnet 9 when assembled with the holder 8A is inserted between the claw poles 6, 7 of the rotor 2.

Finally as shown in FIG. 4C, the permanent magnet 9 is disposed between the claw poles 6, 7 assembled with the holder 8A.

The auxiliary claw 8x provided on the side face of the holder 8A is provided by deforming a section of the holder on a face in contact with the claw pole of the holder 8 and has an elastic force. Since the auxiliary claw 8x has the effect of pressing the permanent magnet 9 with an elastic force onto the side walls of the claw poles 6, 7, it is possible to fix the holder 8 and the permanent magnet 9 in an axial direction together with fixing with respect to the diameter and thus the role of the holder in fixing the permanent magnet to a predetermined position is realized.

The auxiliary claw 8x is cut and raised to open in a direction opposite to the direction of insertion between the claw poles and thus when the permanent magnet 9 and the holder 8 are assembled and inserted between the claw poles of the rotor 2, adverse effects on assembly operation for example by the auxiliary claw 8x catching on the claw pole are avoided and the retaining force in an axial direction with respect to the opposite direction to the insertion direction is further improved.

As described above, according to the present embodiment, the reliability of the permanent magnets provided between claw poles can be improved by preventing shift in an axial direction during operation of the vehicle alternator.

Using FIGs. 5A to 5D, the structure of a holder used in the rotational machine according to a third embodiment of the present invention will be described. The overall structure of the rotational machine according to the present embodiment is the same as that described in FIG. 1.
FIGs . 5A to 5D show the insertion process of the permanent magnet and the holder between the claw poles used in the rotational machine according to the third embodiment of the present invention. In FIGs. 5A to 5D, the same components as those in FIGs. 1 to 3D are denoted by the same reference numerals.

In the example shown in FIGs. 5A to 5D the holder 8B is formed by bending a tabular metal plate. The holder 8B is provided with insertion side faces 8a, 8b, a central connection section 8c and end curved sections 8d, 8e. The auxiliary claw provided on the insertion side faces 8a, 8b is formed from an auxiliary claw 8x and an auxiliary claw 8z. The auxiliary claw 8x is the same as that described in FIG. 2 . The auxiliary claw 8z is provided by deforming a section of the holder on the face making contact with the claw pole of the holder 8. It is formed in an undulating shape and has an elastic force. The end of the auxiliary claw 8z is cut and raised to open in a direction which is opposite (direction opposite to insertion) to the direction of insertion IN between claw poles.

FIG. 5A shows the state after completion of assembly of the rotor and prior to insertion of the permanent magnet 9 stored in an inner section of the holder 8B between the claw poles 6, 7 of the rotor 2.

As shown in FIG. 5B, the permanent magnet 9 and the holder 8B are inserted between the claw poles 6, 7 of the rotor 2. In this manner, as shown in FIG. 5C, initially the insertion side face 8b is deformed to make contact with the side face of the claw pole 6. Finally as shown in FIG. 5D, it is disposed between the claw poles 6, 7.

The auxiliary claw 8z initially makes contact with the side face of the permanent magnet 9 and is deformed toward the side face of the claw poles 6, 7. In the state shown in FIG. 5(D), the auxiliary claw 8z makes contact with an elastic force with both the side faces of the claw poles 6, 7 and the side face of the permanent magnet 9.

The auxiliary claws 8x, 8z provided on the side face of the holder 8A are provided by deforming a section of the holder on a face in contact with the claw pole of the holder 8 and has an elastic force. Since the auxiliary claw 8x, 8z have the effect of pressing the permanent magnet 9 with an elastic force onto the side walls of the claw poles 6, 7, it is possible to fix the holder 8B and the permanent magnet 9 in an axial direction together with fixing with respect to the diameter and thus the role of the holder in fixing the permanent magnet to a predetermined position is realized.

The auxiliary claw 8x, 8z is cut and raised to open in a direction opposite to the direction of insertion between the claw poles and thus when the permanent magnet 9 and the holder 8B are assembled and inserted between the claw poles of the rotor 2, adverse effects on assembly operation for example by the auxiliary claw 8x, 8z catching on the claw pole are avoided and the retaining force in an axial direction with respect to the opposite direction to the insertion direction is further improved.

As described above, according to the present embodiment, the reliability of the permanent magnets provided between claw poles can be improved by preventing shift in an axial direction during operation of the vehicle alternator.

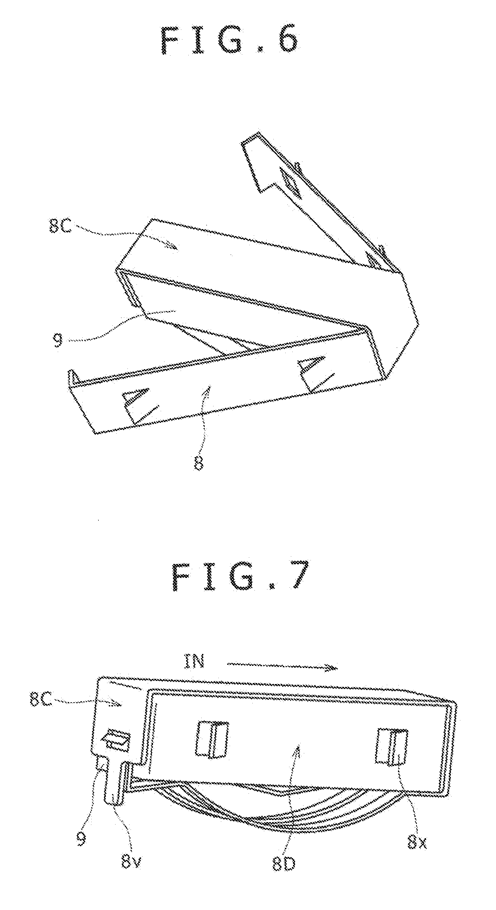

Using FIG. 6, the structure of a holder used in the rotational machine according to a fourth embodiment of the present invention will be described. The overall structure of the rotational machine according to the present embodiment is the same as that described in FIG. 1.
FIG. 6 is a perspective figure of the permanent magnet and the holder used in the rotational machine according to the fourth embodiment of the present invention. In FIG. 6, the same components as those in FIGs. 1 to 4 are denoted by the same reference numerals.

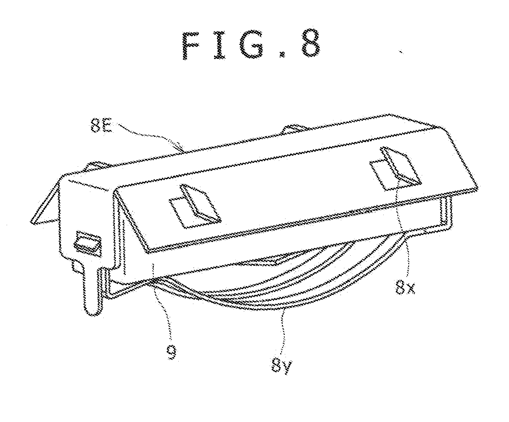

The present example is a combination of the holder 8 shown in FIG. 2 and the holder 8C shown in FIG. 8 and FIG. 9 of Japanese Unexamined Patent Application Publication No. 2004-7958 with respect to the permanent magnets 9. After mounting the holder 8 on the permanent magnets 9, the holder 8C is mounted onto an outer periphery. The holder 8C is formed from a non-magnetic material such as stainless steel.

The permanent magnet 9 can be retained in the direction of the diameter of the rotor between the claw poles by the holder 8C, and can be more firmly fixed in the axial direction of the rotor by the holder 8.

As described above, according to the present embodiment, the reliability of the permanent magnets provided between claw poles can be improved by preventing shift in an axial direction during operation of the vehicle alternator. Furthermore shift of the permanent magnets with respect to an axial direction is prevented.

Using FIG. 7, the structure of a holder used in the rotational machine according to a fifth embodiment of the present invention will be described. The overall structure of the rotational machine according to the present embodiment is the same as that described in FIG. 1.
FIG. 7 is a perspective figure of the permanent magnet and the holder used in the rotational machine according to the fifth embodiment of the present invention. In FIG. 7, the same components as those in FIGs. 1 to 4 are denoted by the same reference numerals.

FIG. 7 is an example similar to that shown in FIG. 6. Since the holder 8D is formed in substantially the same shape as the outer shape of the permanent magnet 9, affixation of the permanent magnet with respect to an axial direction is performed by the auxiliary claw 8x provided on the holder 8D. A tongue-shaped cut-out section 8v is provided on the holder 8C on the end after insertion of the permanent magnet 9 into the claw poles of the stator. As shown in FIG. 7 in Japanese Unexamined Patent Application Publication No. 2004-7958, when inserted between the claw poles, the holder 8C abuts with the end face of the bobbin provided for insulating the claw poles and the electrical wire wound onto the rotor. Thus even when vibration is applied in an axial direction for example when the rotational machine is mounted in a vehicle, the permanent magnet 9 and the holders 8C, 8D can prevent shift with respect to movement in the direction of insertion of the permanent magnets by the tongue-shaped section 8v abutting with the end face of the bobbin. Furthermore movement with respect to movement in a direction opposite to the direction of insertion of the permanent magnets can be prevented by the auxiliary claw 8x provided on the holder 8.

As described above, according to the present embodiment, the reliability of the permanent magnets provided between claw poles can be improved by preventing shift in an axial direction during operation of the vehicle alternator. Furthermore shift of the permanent magnets with respect to an axial direction is prevented.

Using FIG. 8, the structure of a holder used in the rotational machine according to a sixth embodiment of the present invention will be described. The overall structure of the rotational machine according to the present embodiment is the same as that described in FIG. 1.
FIG.8 is a perspective figure of the permanent magnet and the holder used in the rotational machine according to the sixth embodiment of the present invention. In FIG. 8, the same components as those in FIGs. 1 to 4 are denoted by the same reference numerals.

The holder 8E according to the present example integrates the holder 8C and the holder 8D described in FIG. 6.

However unless the material used in this example is non-magnetic, the magnetic flux will be short-circuited between the claw poles by the holder 8 and there is the risk of causing a reduction in the performance of the rotational machine. Therefore it is desirable that the holder 8E is formed from a non-magnetic material such as stainless steel.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A rotational machine having a stator (5) and a rotor (2), the rotor (2) supported rotatably on an inner periphery of the stator (5), the rotor (2) having a pair of claw poles (6, 7) disposed in an alternately opposed orientation and having cylindrical field exciting coils (14) on a central section, a permanent magnet (9) disposed between the claw poles (6, 7) and a holder (8) retaining the permanent magnets (9) to a fixed position, wherein the holder (8) retains the permanent magnets (9) between the claw poles (6, 7) by pressing on a side face of the claw poles (6, 7) as a result of an elastic force acting with respect to the rotational direction of the rotational machine.

2. The rotational machine according to claim 1, wherein the holder (8) is such that the positions pressing onto the side wall of the claw pole (6, 7) as a result of the elastic force applied in a rotational direction are disposed at a plurality of side faces (9A, 9B) of the permanent magnets (9).

3. The rotational machine according to claim 2, wherein the holder (8) is such that the interval between two faces pressing onto the side walls of the claw poles (6, 7) when engaged between the claw poles (6, 7) is wider than the interval between the claw poles (6, 7).

4. The rotational machine according to claim 2, wherein the holder (8) is such that the interval between two faces pressing onto the side walls of the claw poles (6, 7) when engaged between the claw poles (6, 7) is wider than the interval on the side forming the rear end when compared with the interval on the side forming the tip end when inserted between the claw poles (6, 7).

5. The rotational machine according to at least one of the claims 1-4, wherein the holder (8) is such that an auxiliary claw (8x; 8z) is provided on a side face pressing onto a side face of the claw pole (6, 7), the auxiliary claw (8x; 8z) being a projection formed by deforming a section of the side face of the holder (8).

6. The rotational machine according to claim 5, wherein the holder (8) is such that the auxiliary claw (8x; 8z) is formed by cutting and raising a section of the side face of the holder (8), the direction of cutting and raising being in a single direction.

7. The rotational machine according to claim 6, wherein the direction of the cutting and raising of the auxiliary claw (8x; 8z) is opposite to the direction of insertion between the claw poles (6, 7).

8. The rotational machine according to at least one of the claims 1-7, wherein the holder (8) is formed from magnetic material.

9. The rotational machine according to at least one of the claims 1-8, wherein the holder (8) is such that the sectional area of the central connecting section (8c) connecting a plurality of positions pressing on the side faces of the claw poles (6, 7) by the elastic force acting in a rotational direction is smaller than the sectional area of the plurality of positions pressing on a side face of the claw poles (6, 7).

10. The rotational machine according to at least one of the claims 1-9, wherein the holder (8) retains the permanent magnets (9) between the claw poles (6, 7) by pressing with respect to a diameter of the claw poles (6, 7) due to the elastic force acting with respect to the diameter of the rotational machine.
